# EUROPÄISCHE PATENTANMELDUNG

(11) **EP 3 159 254 A1**
(43) Veröffentlichungstag der Anmeldung: **26.04.2017**
(21) Anmeldenummer: 16193724.8
(22) Anmeldetag: 13.10.2016
(51) Int. Cl.: B62M 6/90

(54) **FAHRZEUG, INSBESONDERE ELEKTROFAHRRAD**

(30) Priorität: 22.10.2015 DE 202015105603 U
(71) Anmelder: SECURE-No.com GmbH, 63477 Maintal (DE)
(72) Erfinder: Krechting, Markus Josef, 63477 Maintal (DE)
(74) Vertreter: Albrecht, Ralf

(57) **Zusammenfassung**

Die Erfindung betrifft ein Fahrzeug (1), insbesondere ein Fahrrad, umfassend einen Rahmen (4), einen mechanischen Antrieb, der zum Antreiben des Fahrzeugs (1) mit Muskelkraft ausgelegt ist, einen Elektromotor (3), über den das Fahrrad (1) alternativ und/oder zusätzlich elektromechanisch antreibbar ist, eine Akkumulatoreinheit (5) mit einem Gehäuse (6), in dem ein Akkumulator (10) angeordnet ist, der den Elektromotor (3) mit elektrischem Strom versorgt, und zumindest eine Ortungseinheit (11), die einen Bestandteil eines Fahrzeug-Diebstahlschutz-Ortungssystems bildet, wobei die Ortungseinheit (11) an der Akkumulatoreinheit (5) vorgesehen ist.

## Beschreibung

Die vorliegende Erfindung betrifft ein Fahrzeug, insbesondere ein Fahrrad in Form eines Pedelec, E-Bikes oder dergleichen, umfassend einen mechanischen Antrieb, der zum Antrieben des Fahrzeugs mit Muskelkraft ausgelegt ist, einen Elektromotor, über den das Fahrrad alternativ und/oder zusätzlich elektromechanisch antreibbar ist, eine Akkumulatoreinheit mit einem Gehäuse, in dem ein Akkumulator angeordnet ist, der den Elektromotor mit elektrischem Strom versorgt, und zumindest eine Ortungseinheit, die einen Bestandteil eines Fahrzeug-Diebstahlschutz-Ortungssystems bildet. Ferner betrifft die vorliegende Erfindung einen Akkumulator für ein solches Fahrzeug.

Fahrräder, die eine Ortungseinheit aufweisen, die einen Bestandteil eines Fahrzeug-Diebstahlschutz-Ortungssystems bildet, sind im Stand der Technik in unterschiedlichen Ausgestaltungen bekannt. Die Ortungseinheit ist an eine Energieversorgungseinrichtung angeschlossen, welche die erforderliche Energie zum Betreiben der Ortungseinheit bereitstellt. Die Ortungseinheit weist normalerweise eine GPS- und Datenfunkverbindungseinrichtung auf, über welche die Positionsdaten des Fahrrads ermittelt und an einen zentralen Rechner eines Fahrzeug-Diebstahlschutz-Ortungssystems gesendet werden können. Im Falle eines Diebstahls können dann die aktuellen Positionsdaten des Fahrrads abgerufen werden, um dieses ausfindig zu machen.

So offenbart beispielsweise die DE 10 2005 001 209 A1 ein Fahrrad der eingangs genannten Art, bei dem die Ortungseinheit und die Energieversorgungseinrichtung im Rahmen des Fahrrads positioniert sind. Die Integration dieser Komponenten im Rahmen ist dahingehend von Vorteil, dass sie von außen nicht sichtbar sind, weshalb potentielle Diebe auf diese nicht aufmerksam werden. Darüber hinaus ist die Ortungseinheit von außen unzugänglich, weshalb sie weder entfernt noch zerstört werden kann. Ein Nachteil besteht allerdings darin, dass sich die Komponenten nur während der Herstellung bzw. Montage des Fahrrads im Rahmen montieren lassen. Eine Nachrüstung ist entsprechend problematisch. Darüber hinaus bereitet die Energieversorgung aufgrund der unzugänglichen Positionierung der Energieversorgungseinrichtung Probleme. In diesem Zusammenhang wird vorgeschlagen, eine langlebige Batterie zu verwenden. Nach Ablauf der Lebensdauer ist die Ortungseinheit aber nicht mehr einsatzfähig. Alternativ kann ein Akkumulator eingesetzt werden, der beispielsweise beim Betätigen der Pedale oder mittels Solarzellen aufgeladen wird. Dies führt jedoch zu einem sehr komplexen und teuren Aufbau. Ferner lassen sich die Ortungseinheit und der Akkumulator weder problemlos warten noch austauschen.

Die GB 2 484 273 A beschreibt ein Fahrrad, bei dem die Ortungseinheit in das Gehäuse einer Fahrradbeleuchtung integriert ist. Eine derartige Anordnung ist dahingehend von Vorteil, dass die Ortungseinheit einfach zu montieren sowie zu warten ist und auch nachgerüstet werden kann. Zudem ist die Energieversorgung der Ortungseinheit unproblematisch, da die Ortungseinheit im einfachsten Fall an die Energieversorgung der Fahrradbeleuchtung angeschlossen werden kann. Alternativ ist es aber auch möglich, eine gesonderte Energieversorgungseinrichtung in das Gehäuse der Fahrradbeleuchtung zu integrieren. Ein weiterer Vorteil besteht darin, dass die Ortungseinheit von außen für Diebe nur bedingt oder gar nicht erkennbar ist. Nachteilig ist allerdings, dass die Ortungseinheit zusammen mit der Fahrradbeleuchtung von einem Dieb in einfacher Weise entfernt oder zerstört werden kann, wenn dieser ihre Position kennt. Die Fahrradbeleuchtung kann von dem Dieb daraufhin ohne großen finanziellen Aufwand erneuert werden.

Die DE 20 2008 009 614 U1 schlägt vor, die Ortungseinheit in das Rohr einer Fahrrad-Sattelstütze zu integrieren. Aber auch hier können Diebe die Ortungseinheit zusammen mit der Fahrrad-Sattelstütze ohne weiteres entfernen oder die Ortungseinheit zerstören.

Ausgehend von diesem Stand der Technik ist es eine Aufgabe der vorliegenden Erfindung, ein Fahrzeug der eingangs genannten Art mit alternativem Aufbau zu schaffen, der die zuvor beschriebenen Probleme zumindest teilweise behebt.

Zur Lösung dieser Aufgabe schafft die vorliegende Erfindung ein Fahrzeug der eingangs genannten Art, bei dem die Ortungseinheit an der Akkumulatoreinheit vorgesehen ist. Die Anordnung der Ortungseinheit an der Akkumulatoreinheit ist dahingehend von Vorteil, dass die Akkumulatoreinheit grundsätzlich ausreichend Platz zur Verfügung stellt. Gegebenenfalls kann die Ortungseinheit in Abhängigkeit von ihrer eigenen und der Ausgestaltung der Akkumulatoreinheit auch problemlos nachgerüstet werden. Grundsätzlich kann ein Dieb zwar die Ortungseinheit zerstören, wenn er ihre Position kennt. Dies geht allerdings auch mit einer Beschädigung der Akkumulatoreinheit einher, die ein wesentliches und auch teures Bauteil des Fahrzeugs darstellt, weshalb ein Dieb hiervon Abstand nehmen wird.

Gemäß einer Ausgestaltung der vorliegenden Erfindung weist die Ortungseinheit eine GPS- und Datenfunkverbindungseinrichtung sowie eine mit dieser verbundene Antenne auf. Die GPS- und Datenfunkverbindungseinrichtung bedient sich vorteilhaft einem Informationsübertragungsstandard, wie beispielsweise der GSM-, HSCSD-, GPRS- und/oder EDGE-Technologie, um die Verwendung von Standardkomponenten zu ermöglichen. Insbesondere ist sie zusätzlich mit einer Bluetooth-Übertragungstechnik ausgestattet, wodurch in Bluetooth-Übertragungsreichweite eine Kommunikation mit mobilen Endgeräten ermöglicht wird.

Vorteilhaft ist die Ortungseinheit zumindest im betriebsbereiten Zustand des Fahrzeugs elektrisch mit dem Akkumulator verbunden. Entsprechend kann grundsätzlich auf eine gesonderte Energieversorgungseinrichtung für die Ortungseinheit verzichtet werden.

Bevorzugt ist eine elektrisch mit der Ortungseinheit verbundene zusätzliche Energieversorgungseinrichtung vorgesehen, um sicherzustellen, dass die Ortungseinheit auch ohne ein Bord-Netz oder im entladenen Zustand des Akkumulators mit Strom versorgt wird und weiterhin funktionsfähig ist.

Vorteilhaft ist die zusätzliche Energieversorgungseinrichtung in Form eines über ein Bord-Netz aufladbaren Not-Akkumulators vorgesehen. Entsprechend kann in einfacher Art und Weise sichergestellt werden, dass die zusätzliche Energieversorgungseinrichtung stets einsatzbereit ist.

Bevorzugt ist hierzu eine Laderegelung vorgesehen, die derart ausgebildet ist, dass der Not-Akkumulator von dem Bord-Netz stets in einem Ladezustand gehalten wird, in dem er zumindest überwiegend aufgeladenen ist. Die Laderegelung ist vorteilhaft integral mit der Laderegelung des Akkumulators ausgebildet. Sie kann allerdings auch gesondert vorgesehen sein.

Gemäß einer Ausgestaltung der vorliegenden Erfindung weist die Akkumulatoreinheit eine Halterung auf, die lösbar an dem Fahrzeug befestigt oder integral mit einer Komponente des Fahrzeugs ausgebildet ist, insbesondere integral mit einem Rahmen des Fahrzeugs, wobei das Gehäuse lösbar mit der Halterung verbunden ist. Entsprechend lässt sich das Gehäuse zusammen mit dem Akkumulator vom Fahrzeug lösen, so dass der Akkumulator an einem Ort entfernt vom Fahrzeug aufgeladen werden kann. Dies ist insbesondere sehr praktisch für den Benutzer. Eine Befestigung der Halterung an dem Fahrzeug kann beispielsweise unter Verwendung von Sicherheitsschrauben erfolgen, die nur mit Spezialwerkzeug zu betätigen sind.

Gemäß einer ersten Variante der vorliegenden Erfindung ist die zumindest eine Ortungseinheit an der Halterung, bevorzugt innerhalb der Halterung angeordnet. Damit verbleibt die Ortungseinheit stets am Fahrzeug und sichert dieses.

Gemäß einer zweiten Variante der vorliegenden Erfindung ist die zumindest eine Ortungseinheit an dem Gehäuse, bevorzugt innerhalb des Gehäuses angeordnet. Damit kann der Akkumulator selbst geortet werden, was allerdings dazu führt, dass eine Ortung des Fahrzeugs nur dann möglich ist, wenn das Gehäuse am Fahrzeug gehalten ist.

Gemäß einer dritten Variante der vorliegenden Erfindung ist eine erste Ortungseinheit an der Halterung, bevorzugt innerhalb der Halterung angeordnet, und eine zweite Ortungseinheit ist an dem Gehäuse, bevorzugt innerhalb des Gehäuses positioniert. Diese Variante kombiniert somit die Vorteile der ersten beiden Varianten.

Bevorzugt sind das Gehäuse und die Halterung über ein Schloss lösbar miteinander verbunden. Auf diese Weise wird verhindert, dass ein Dieb das Gehäuse zusammen mit dem Akkumulator ohne weiteres von der Halterung lösen kann.

Vorteilhaft sind wenigstens einige Komponenten der zumindest einen Ortungseinheit wasserdicht verpackt, insbesondere mit einem wasserdichten Material umhüllt. So können beispielsweise Komponenten der Ortungseinheit in einer Folie eingeschweißt sein. Alternativ ist es aber auch möglich, Komponenten der Ortungseinheit mit einem wasserdichten Harz zu umhüllen oder mit einem wasserdichten Material in dem Gehäuse oder der Halterung einzubetten. Im letzteren Fall kann auch verhindert werden, dass sich die Ortungseinheit von der Akkumulatoreinheit lösen lässt, ohne diese dabei zu zerstören.

Zur Lösung der eingangs genannten Aufgabe schafft die vorliegende Erfindung ferner eine Akkumulatoreinheit mit zumindest einer integrierten Ortungseinheit, insbesondere für ein erfindungsgemäßes Fahrzeug.

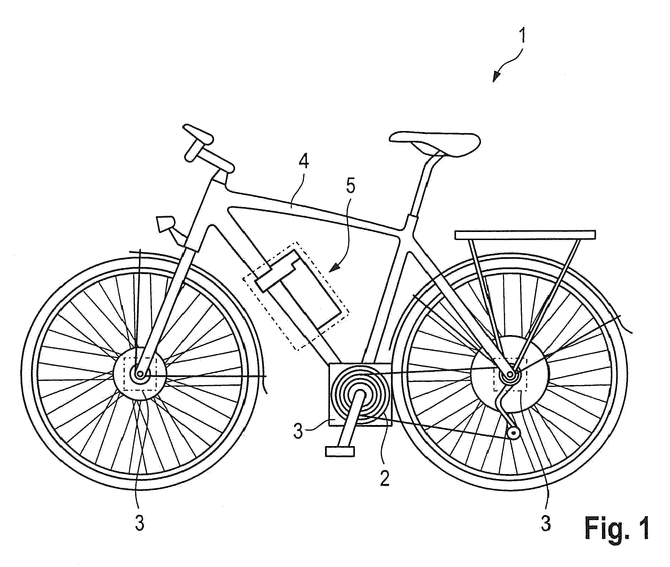

Weitere Merkmale und Vorteile der vorliegenden Erfindung werden anhand der nachfolgenden Beschreibung eines Fahrzeugs gemäß einer Ausführungsform der vorliegenden Erfindung unter Bezugnahme auf die beiliegende Zeichnung deutlich. Darin ist
Figur 1 eine schematische Seitenansicht eines Fahrrads, das mit Muskelkraft und/oder elektromechanisch über einen Elektromotor antreibbar ist;
Figur 2 eine vergrößerte schematische Ansicht des in Figur 1 gekennzeichneten Ausschnitts, der eine Akkumulatoreinheit gemäß einer ersten Ausführungsform der Erfindung zeigt, über die der Elektromotor mit Strom versorgt wird, wobei im Innern der Akkumulatoreinheit angeordnete Komponenten gestrichelt dargestellt sind; und
Figur 3 analog zu Figur 2 eine vergrößerte schematische Ansicht des in Figur 1 gekennzeichneten Ausschnitts, der eine Akkumulatoreinheit gemäß einer zweiten Ausführungsform der Erfindung zeigt.

Das Fahrzeug bzw. Fahrrad 1, bei dem es sich um ein so genanntes Elektro-Bike handelt, weist einen mechanischen Antrieb 2, der vorliegend als Kurbeltrieb ausgebildet ist, einen Elektromotor 3 und eine an einem Rahmen 4 des Fahrrads 1 befestigte Akkumulatoreinheit 5 auf, über die der Elektromotor 3 mit elektrischem Strom versorgt wird. Entsprechend kann das Fahrrad 1 wahlweise mit Muskelkraft und/oder elektromechanisch über den Elektromotor 3 angetrieben werden.

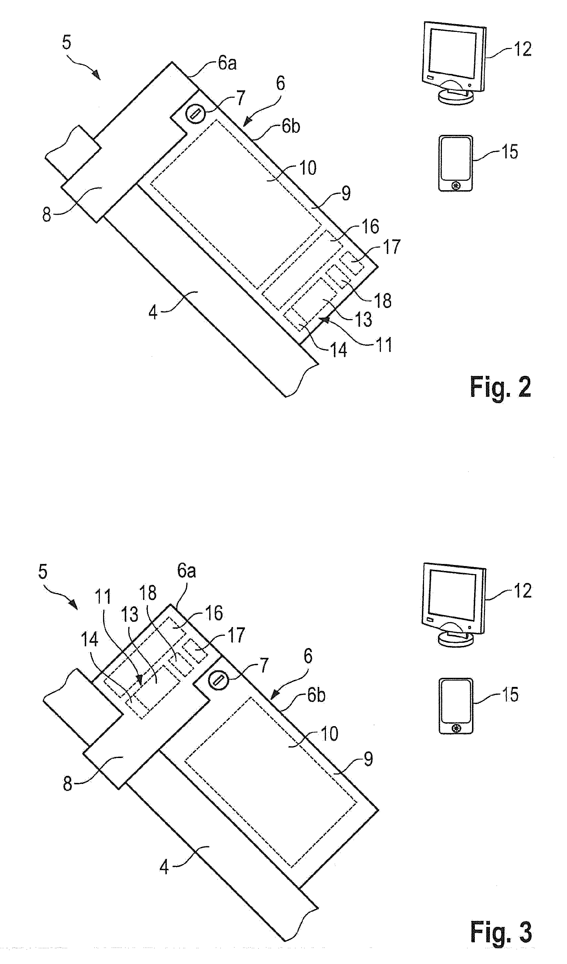

Die Akkumulatoreinheit 5 umfasst gemäß der in Figur 2 dargestellten Ausführungsform ein Gehäuse 6 und eine lösbar mit diesem verbundene Halterung 8. Im montierten Zustand sind das Gehäuse 6 und die Halterung 8 formschlüssig zusammengesetzt und über eine nicht näher dargestellte Mechanik aneinander fixiert, die über ein Schloss 7 betätigbar und entsprechend gegen unbefugten Zugriff gesichert ist. Die Halterung 8 ist vorliegend fest mit dem Rahmen 4 des Fahrrads 1 verbunden ist. Unter einer " festen" Verbindung wird vorliegend jede Verbindung verstanden, die sich nicht ohne weiteres von einer unbefugten Person lösen lässt. So kann die Halterung 8 unter Verwendung von nur mit einem Spezialwerkzeug betätigbaren Sicherheitsschrauben an dem Rahmen 4 befestigt sein, um nur ein Beispiel zu nennen. Alternativ kann die Halterung 8 aber auch integral mit dem Rahmen 4 ausgebildet sein. Das Gehäuse 6 bildet einen Aufnahmeraum 9, in dem ein Akkumulator 10 aufgenommen ist, der im montierten Zustand der Akkumulatoreinheit 5 elektrisch mit dem Elektromotor 3 verbunden ist, was vorliegend nicht näher dargestellt ist. Die elektrische Verbindung kann im einfachsten Fall durch ein aus dem Gehäuse 6 herausgeführtes und lösbar mit dem Elektromotor 3 verbindbares Kabel realisiert werden. Vorliegend führt jedoch ein Kabel vom Elektromotor 3 in die Halterung 8 und wird über an dem Gehäuse 6 und der Halterung 8 vorgesehene Kontaktelemente mit dem Akkumulator 10 elektrisch verbunden, sobald das Gehäuse 6 und die Halterung 8 formschlüssig zusammengesetzt werden. Innerhalb des Gehäuses 6 ist ferner eine elektrisch mit dem Akkumulator 10 verbundene Ortungseinheit 11 angeordnet, die einen Bestandteil eines Fahrzeug-Diebstahlschutz-Ortungssystems bildet, das vorliegend aus zumindest einem Rechner 12, einer mit diesem verbundenen Datenbank und zumindest einem mobilen Endgerät 15 gebildet wird, beispielsweise in Form von Smartphones oder dergleichen. Anstelle eines Rechners 12 kann grundsätzlich auch eine mobile Plattform oder eine Online-Plattform verwendet werden. Die Ortungseinheit 11 weist eine GPS- und Datenfunkverbindungseinrichtung 13 und eine mit dieser verbundene Antenne 14 auf. Die GPS- und Datenfunkverbindungseinrichtung 13 ist vorliegend zusätzlich mit einer Bluetooth-Übertragungstechnik ausgestattet, um mit einem mobilen Endgerät 15 des Besitzers des Fahrrads 1 zu kommunizieren, wenn sich dieses in Bluetooth-Übertragungsreichweite befindet. Die Ortungseinheit 11 ist zudem mit einer zusätzlichen, innerhalb des Gehäuses 6 angeordneten Energieversorgungseinrichtung 16 elektrisch verbunden, die sicherstellt, dass die Ortungseinheit 11 auch bei leerem Akkumulator 10 betriebsbereit ist. Die zusätzliche Energieversorgung 16 ist vorliegend als Not-Akkumulator ausgebildet und ist über ein nicht näher dargestelltes Bord-Netz aufladbar. Zum Aufladen sowohl des Akkumulators 10 als auch der Energieversorgungseinrichtung 16 ist ein Laderegler 17 vorgesehen, der vor Tiefenentladung, Überladung, Überhitzung und Überlastung schützt. Zudem überwacht der Laderegler 17 den Ladezustand der Energieversorgungseinrichtung 16 und sorgt dafür, dass diese nach Möglichkeit aufgeladen wird. Es sei darauf hingewiesen, dass für den Akkumulator 10 und die Energieversorgungseinrichtung 16 auch separate Laderegler vorgesehen werden können. In das Gehäuse 6 ist ferner eine Alarmeinrichtung 18 integriert, die derart ausgestaltet ist, dass sie ein Alarmsignal aussendet, beispielsweise in Form eines Warntons oder einer Nachricht an das Endgerät 15 des Fahrradbesitzers, sobald ein unerwünschter Zugriff durch Dritte festgestellt wird. Eine solche Feststellung kann beispielsweise anhand der Tatsache getroffen werden, dass die Stromzufuhr zur Ortungseinheit 11 unterbrochen wurde und/oder dass sich die Position der Ortungseinheit 11 ändert, obwohl das Fahrrad 1 abgestellt wurde. Auch kann die Alarmeinrichtung 18 mit einem Bewegungsmelder versehen sein, der ungeplante Bewegungen registriert.

Während des Betriebs des Fahrrad-Diebstahlschutz-Ortungssystems empfängt die GPS- und Datenfunkverbindungseinrichtung 13 über die Antenne 14 GPS-Signale, die beispielsweise von verschiedenen Satelliten aus gesendet werden. Anhand dieser Signale kann die GPS- und Datenfunkverbindungseinrichtung 13 aktuelle Positionsdaten der Ortungseinheit 11 und damit des Fahrrads 1 generieren. Diese Positionsdaten sendet die GPS- und Datenfunkverbindungseinrichtung 13 über die Antenne 14 an den Rechner 12, vorliegend über ein Mobilfunknetz, der die empfangenen Daten an das Endgerät 15 des Fahrradbesitzers weiterleitet. Der Besitzer ist damit in der Lage, den aktuellen Standort seines Fahrrads 1 abzufragen, sollte dieses beispielsweise gestohlen worden sein. Die Kommunikation zwischen der Ortungseinheit 11, dem Rechner 12 und dem Endgerät 15 des Fahrradbesitzers kann kontinuierlich, in regelmäßigen zeitlichen Abständen, auf Anfrage des Fahrradbesitzers oder bei Eintreten bestimmter Ereignisse erfolgen, wie beispielsweise bei Auslösung eines Alarms durch die Alarmeinrichtung 18. Es sollte klar sein, dass grundsätzlich auf den Rechner 12 verzichtet werden kann, so dass die Kommunikation direkt zwischen der Ortungseinheit 11 und dem Endgerät 15 des Fahrradbesitzers erfolgt.

Die Ortungseinheit 11 kann derart ausgebildet sein, dass sie von dem Benutzer aktiviert und deaktiviert werden kann. Die Aktivierung bzw. Deaktivierung kann beispielsweise über einen induktiven Schlüssel-Chip oder per Bluetooth über das Endgerät des Fahrradbesitzers erfolgen.

Figur 2 zeigt eine alternative Ausgestaltung einer Akkumulatoreinheit 5 gemäß einer weiteren Ausführungsform der vorliegenden Erfindung. Diese weitere Ausführungsform unterscheidet sich von der zuvor beschriebenen Ausführungsform dahingehend, dass die Ortungseinheit 11, die zusätzliche Energieversorgungseinrichtung 16, der Laderegler 17 sowie die Alarmeinrichtung 18 innerhalb der Halterung 8 angeordnet sind.

Ebenso ist es möglich, auch wenn dies nicht gezeigt ist, dass eine Ortungseinheit 11, eine zusätzliche Energieversorgung 16 und eine Alarmeinrichtung 18 jeweils im Gehäuse 6 und in der Halterung 8 vorgesehen sind.

Es sollte klar sein, dass weitere Änderungen, Modifikationen sowie Kombinationen von Einzelmerkmalen der jeweiligen Ausführungsformen möglich sind, ohne den durch die beiliegenden Ansprüche definierten Schutzbereich zu verlassen.

## Patentansprüche

1. Fahrzeug (1), insbesondere Fahrrad, umfassend einen Rahmen (4), einen mechanischen Antrieb, der zum Antreiben des Fahrzeugs (1) mit Muskelkraft ausgelegt ist, einen Elektromotor (3), über den das Fahrrad (1) alternativ und/oder zusätzlich elektromechanisch antreibbar ist, eine Akkumulatoreinheit (5) mit einem Gehäuse (6), in dem ein Akkumulator (10) angeordnet ist, der den Elektromotor (3) mit elektrischem Strom versorgt, und zumindest eine Ortungseinheit (11), die einen Bestandteil eines Fahrzeug-Diebstahlschutz-Ortungssystems bildet, **dadurch gekennzeichnet, dass** die Ortungseinheit (11) an der Akkumulatoreinheit (5) vorgesehen ist.

2. Fahrzeug (1) nach Anspruch 1, **dadurch gekennzeichnet, dass** die Ortungseinheit (11) eine GPS- und Datenfunkverbindungseinrichtung (13) sowie eine mit dieser verbundene Antenne (14) aufweist, wobei die GPS- und Datenfunkverbindungseinrichtung (13) insbesondere zusätzlich mit einer Bluetooth-Übertragungstechnik ausgestattet ist.

3. Fahrzeug (1) nach einem der vorhergehenden Ansprüche, **dadurch gekennzeichnet, dass** die Ortungseinheit (11) zumindest im betriebsbereiten Zustand des Fahrzeugs (1) elektrisch mit dem Akkumulator (10) verbunden ist.

4. Fahrzeug (1) nach einem der vorhergehenden Ansprüche, **dadurch gekennzeichnet, dass** eine elektrisch mit der Ortungseinheit (11) verbundene zusätzliche Energieversorgungseinrichtung (16) vorgesehen ist.

5. Fahrzeug (1) nach Anspruch 4, **dadurch gekennzeichnet, dass** die zusätzliche Energieversorgungseinrichtung (16) in Form eines über ein Bord-Netz aufladbaren Not-Akkumulators vorgesehen ist.

6. Fahrzeug (1) nach einem der vorhergehenden Ansprüche, **dadurch gekennzeichnet, dass** die Akkumulatoreinheit (5) eine Halterung (8) aufweist, die lösbar an dem Fahrzeug (1) befestigt oder integral mit einer Komponente des Fahrzeugs (1) ausgebildet ist, insbesondere integral mit dem Rahmen (4), und dass das Gehäuse (6) lösbar mit der Halterung (8) verbunden ist.

7. Fahrzeug (1) nach Anspruch 6, **dadurch gekennzeichnet, dass** die zumindest eine Ortungseinheit (11) an der Halterung (8), bevorzugt innerhalb der Halterung (8) angeordnet ist.

8. Fahrzeug (1) nach Anspruch 6 oder 7, **dadurch gekennzeichnet, dass** die zumindest eine Ortungseinheit (11) oder eine weitere Ortungseinheit (11) an dem Gehäuse (6), bevorzugt innerhalb des Gehäuses (6) angeordnet ist.

9. Fahrzeug (1) nach einem der Ansprüche 6 bis 8, **dadurch gekennzeichnet, dass** das Gehäuse (6) und die Halterung (8) über ein Schloss (7) lösbar miteinander verbunden sind.

10. Fahrzeug (1) nach einem der vorhergehenden Ansprüche, **dadurch gekennzeichnet, dass** zumindest einige Komponenten der Ortungseinheit (11) wasserdicht verpackt, insbesondere mit einem wasserdichten Material umhüllt sind.

11. Akkumulatoreinheit (5) mit integrierter Ortungseinheit (11), insbesondere für ein Fahrzeug (1) nach einem der vorhergehenden Ansprüche.
